# EUROPEAN PATENT SPECIFICATION

(11) **EP 0 561 604 B1**
(45) Date of publication and mention of the grant of the patent: **24.01.1996**
(21) Application number: 93301970.5
(22) Date of filing: 16.03.1993
(51) Int. Cl.: B30B 1/26

(54) **Power transmission for mechanical press**
Antriebseinrichtung für eine mechanische Presse
Transmission de puissance pour presse mécanique

(30) Priority: 16.03.1992 JP 89259/92; 23.10.1992 JP 307946/92; 04.11.1992 JP 317962/92; 25.12.1992 JP 358010/92; 29.01.1993 JP 32395/93
(43) Date of publication of application: 22.09.1993
(73) Proprietor: ISHIKAWAJIMA-HARIMA JUKOGYO KABUSHIKI KAISHA, Chiyoda-ku Tokyo-to (JP)
(72) Inventor: Hayashi, Keiichiro, Kamakura-shi, Kanagawa-ken (JP)
(74) Representative: Jennings, Nigel Robin

(56) References cited:
- EP-A- 0 074 250
- WO-A-89/02550
- DE-A- 3 502 665
- DE-A- 4 004 290
- DE-C- 921 553
- GB-A- 2 182 750
- SOVIET INVENTIONS ILLUSTRATED Section PQ, Week 8731, 12 August 1987 Derwent Publications Ltd., London, GB; Class P71, AN 87-220240/31
- Patent Abstract of Japan vol. 8, no.180(M-318)(1617) 18.August 1984 & JP-A-59 070 497(AIDA))

## Description

The present invention relates to a power transmission for a mechanical press for transmitting the drive force of a drive motor to a slide drive, a workpiece transport drive or the like.

In certain known mechanical presses, a die-supporting slide is driven by a slide drive to press a workpiece. In synchronism with the pressing operation, a workpiece transport drive is driven to transport a workpiece. Thus, workpieces or blanks are continuously formed into products.

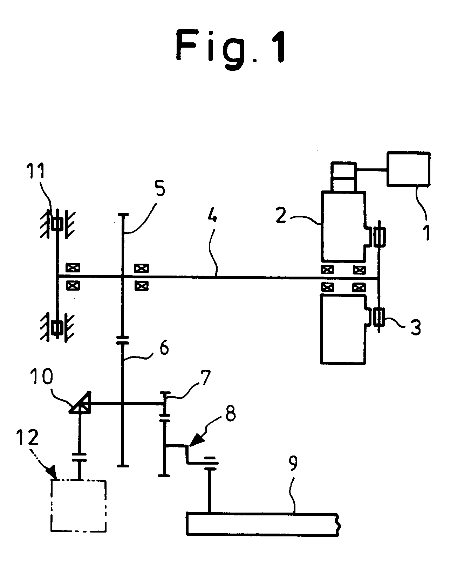

Figure 1 is a schematic view of a known power transmission for transmitting a driving force to such slide and workpiece transport drives. A drive motor 1 is driven to rotate a flywheel 2 which constitutes a store of rotational energy. A clutch 3 is then clutched or engaged with the flywheel 2 to transmit the rotational energy stored in it as a drive force to a power transmission shaft 4. The drive force is received by a power take-off gear 5 on the shaft 4 and is transmitted through a junction gear 6 to a pinion 7 coaxial with the gear 6. The pinion 7 is rotated to drive a slide drive 8 so that a slide 9 which supports a die is actuated to perform a pressing operation. At the same time, the rotation of the junction gear 6 is also transmitted through bevel gearing 10 or the like to a workpiece transport drive 12. Reference numeral 11 denotes a brake for the power transmission shaft 4.

In the above known power transmission, movement of the drives 8 and 12 can be controlled, for structural reasons, only by selective engagement and disengagement of the clutch 3 and velocity-control of the flywheel 2. Therefore, for example, the working velocity of the slide 9 cannot be controlled during a working stroke of the slide 9 and pressing cannot be carried out in an operation in which the slide 9 is temporarily stopped at its bottom dead centre position. As a result, the flexibility and efficiency of pressing for different kinds of materials is very limited.

In the known power transmission, the slide drive 8 is actuated by engaging the clutch 3 with the rotating flywheel 2 which causes mechanical shock and considerable noise. Moreover, the clutch 3 requires connection pads such as friction inserts, which are consumed. This necessitates a great number of replacement pads being available for exchange and periodic checking is necessary to determine whether the pads being used need to be exchanged.

DE-A-4004290, on which the precharacterising portion of claims 1 and 2 is based, discloses a power transmission for a mechanical press for transmitting the rotational energy of a flywheel driven by a motor to a slide drive of the mechanical press including a flywheel 1, planetary gearing 2, a clutch/brake mechanism 3 and spur gearing 4 for coupling to different types of press. The sun wheel 7 of the planetary gearing 2 is connected to be rotated by the flywheel 1 and meshes with planet gears 9. On the side remote from the flywheel 1 the planet carrier 11 has a tubular extension 15 which is connected to outer clutch plates 16 of the clutch/brake mechanism 3 which has a central coupling shaft 14 carrying the spur gearing 4 and a rotary connector 21. Inner clutch plates 19 associated with the clutch plates 16 are connected via a cooperating set of clutch/brake plates 17,20 to the coupling shaft 14.

It is thus the primary object of the present invention to provide a power transmission for a mechanical press which can control the working velocity of a slide or the like so as to be able to carry out press operations on different kinds of materials and which employs no clutch thereby enabling pressing to be performed without having to check whether consumable items need to be replaced and thus at lower cost.

According to the present invention a power transmission for a mechanical press for transmitting the rotational energy of a flywheel driven by a motor to a slide drive of the mechanical press, the transmission including a transmission shaft of which one end is adapted to be connected to the flywheel and the other end is connected to a power take-off gear for connection to the slide drive, the transmission shaft including planetary gearing comprising three elements, a sun gear, one or more planet gears in mesh with the sun gear and connected to a common planet carrier and an internally toothed ring gear in mesh with the or each planet gear, a portion of the transmission shaft which is adapted to be connected to the flywheel being connected to one of the said elements and speed control means being connected to another of the said elements and arranged to adjust its speed and thus to adjust the speed of the power take-off gear is characterised in that the power take-off gear is connected to rotate with the third of the said elements.

In a modified embodiment the three elements of the planetary gearing comprise a first sun gear, a second gun gear and one or more sets of two connected planet gears in mesh with respective sun gears and connected to a common planet carrier.

Thus the transmission in accordance with the invention includes planetary gearing having three elements which are rotatable with respect to one another, two of which constitute the power input from the flywheel and the power output to the power take-off gear, respectively. The speed of the third element is controlled by speed control means and this results in control of the speed of the element which constitutes the power output.

The speed control means may be a servo motor and this may be used either to increase or to decrease the speed of the element to which it is connected. Alternatively, the speed control means may be a variable torque brake and this may of course be used only to reduce the speed of the element of the planetary gearing with which it is associated.

In one embodiment of the invention in which the speed control means is a variable torque brake there is a control unit including a brake controller arranged to supply a control signal to the variable torque brake, a speed meter on the section of the transmission shaft which is adapted to be connected to the flywheel and a press controller arranged to supply a working signal to the brake controller which is a function of the magnitude of the signal produced by the speed meter.

The power available from the flywheel may, under certain circumstances, be considerably greater than that required by the mechanical press and in order to avoid all the surplus energy being absorbed by the servo motor or brake the power transmission may include a differential gear whose power input is connected to be rotated with the power take-off gear and one of whose power inputs is connected to transmit rotational power to the portion of the transmission shaft which is adapted to be connected to the flywheel and the other of whose power outputs is connected to the servo motor or brake.

In use, the power transmission will be connected to a flywheel and this connection may be effected by means of a conventional clutch. However, in a preferred embodiment of the invention there is a brake arranged to prevent rotation of the power take-off gear and an on-off coupling, which is preferably in the form of a gear coupling, arranged between the flywheel and the transmission shaft.

The present invention also includes a drive system for a mechanical press including a power transmission of the type referred to above, a flywheel and a drive motor. The invention also embraces a mechanical press having a slide drive for moving the pressing member and a power transmission of the type referred to above, the power take-off gear being connected to the slide drive and a load cell being provided on the slide drive and arranged to detect an overload applied to the slide and to supply a signal indicative thereof to the servo motor which may be tripped or disabled thereby or controlled to be rotated at a predetermined rotational velocity to eliminate the overload.

Further features and details of the present invention will be apparent from the following description of certain specific embodiments which is given by way of example with reference to Figures 2 to 16 of the accompanying drawings, in which:-
Figures 2 to 13 are schematic views showing first to twelfth embodiments, respectively, of a power transmission for a mechanical press according to the present invention;
Figure 14 is a schematic view showing the flow of electrical and mechanical power in the tenth embodiment shown in Figure 11; and
Figures 15 and 16 are schematic views showing thirteenth and fourteenth embodiments of the present invention, respectively.

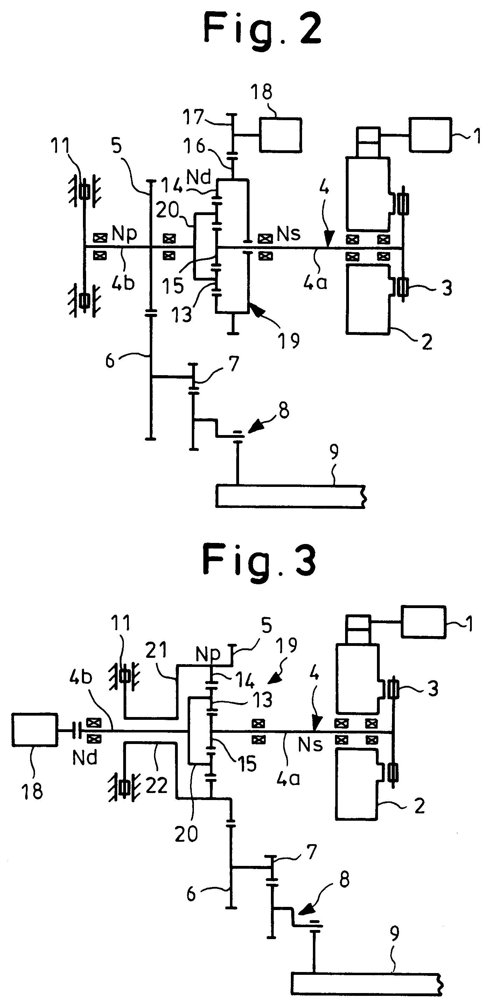

Figure 2 shows a first embodiment of the present invention and is directed to the case in which the rotational energy of a flywheel is transmitted as a drive force to a slide. The power transmission is generally similar in structure to that shown in Figure 1 and the same reference numerals are used for similar components. However, the power transmission shaft 4 is divided at a position between the flywheel 2 and the power take-off gear 5 into first and second shaft sections 4a and 4b adjacent to the flywheel 2 and the gear 5, respectively. Arranged between the shaft sections 4a and 4b is a planetary gear system 19 which comprises a sun gear 15, one or more planet gears 13 and an internally toothed ring gear or annulus 14 in mesh with one another in that order. The sun gear 15 is connected to the shaft section 4a and a planet carrier 20 which carries the planet gears 13 is connected to the shaft section 4b which constitutes the power take-off shaft. A power take-off gear 5 is mounted on the second shaft section 4b so that the rotational energy of the flywheel 2 is transmitted from the first shaft section 4a through the planetary gearing 19 to the power take-off gear 5 from which the power is transmitted to the slide drive 8. The ring gear 14 has an externally toothed ring gear 16 attached to its outer periphery which is in mesh with a pinion 17. The pinion 17 is mounted on the shaft of a servo motor 18 such as AC servo motor. As a result, the servo motor 18 may be driven to control rotation of the carrier 20 of the planet gears 13 so that rotation of the power take-off gear 5 on the second shaft section 4b with respect to the first shaft section 4a can be varied to control the working velocity of the slide 9 which is vertically displaced by the slide drive 8.

When the clutch 3 is engaged with the flywheel 2, which is rotated by the motor 1, the rotational energy of the flywheel 2 passes through the clutch 3 to the first shaft section 4a and is transmitted through the planetary gearing 19 to the second shaft section 4b and the power take-off gear 5 on the shaft section 4b. The rotational velocity of the planet carrier 20 of the planet gears 13, which constitutes the output of the planetary gearing 19, can be controlled by varying the speed of the servo motor 18 so that the rotational velocity of the power take-off gear 5 can be controlled at will. Movement of the slide 9 can thus also be controlled at will.

The following equations apply:$\begin{matrix}\begin{matrix}\begin{matrix}{\text{N}}_{\text{d}} {\text{= N}}_{\text{p}} \text{-} \frac{{\text{Z}}_{\text{1}}}{{\text{Z}}_{\text{3}}} {\text{x (N}}_{\text{s}} {\text{- N}}_{\text{p}} \text{)}\end{matrix} \\ \begin{matrix}{\text{Z}}_{\text{2}} \text{=} \frac{{\text{Z}}_{\text{3}} {\text{- Z}}_{\text{1}}}{\text{2}}\end{matrix}\end{matrix}\end{matrix}$ where Nₛ is the rotational velocity of the first shaft section 4a;
Nₚ is the rotational velocity of the second shaft section 4b;
N_{d} is the rotational velocity of the internally toothed ring gear 14 of the planetary gearing 19 driven by the servo motor 18;
Z₁ is the number of teeth on the sun gear 15;
Z₂ is the number of teeth on the planet gear 13; and
Z₃ is the number of teeth on the ring gear 14.

Therefore, based on equation (1) above, in normal operation where ${\text{N}}_{\text{p}} {\text{= N}}_{\text{s}}$, the rotational velocity of the internally toothed ring gear 14 is to be controlled by the servo motor 18 such that ${\text{N}}_{\text{d}} {\text{= N}}_{\text{s}}$.

When the servo motor 18 is stopped (N_{d} = 0), the following is derived from the equation (1):${\text{N}}_{\text{p}} \text{=} \frac{{\text{Z}}_{\text{1}}}{{\text{Z}}_{\text{1}} {\text{+ Z}}_{\text{3}}} {\text{x N}}_{\text{s}}$ Under this condition, the drive force is received by the power take-off gear 5 and is transmitted to the slide drive 8.

When the press operation is to be stopped, i.e. when the slide 9 is to be stopped (Nₚ = 0), based on equation (1), the rotational velocity of the ring gear 14 is to be controlled by the servo motor 18 such that the following relationship is satisfied:${\text{N}}_{\text{d}} \text{= -} \frac{{\text{Z}}_{\text{1}}}{{\text{Z}}_{\text{3}}} {\text{x N}}_{\text{s}}$ Thus, in the apparatus of the present invention, the rotational velocity of a portion of the planetary gearing 19 is controlled by the servo motor 18 so that the working velocity of the slide 9 can be freely controlled during a working stroke of the slide 9. Therefore, maintaining the pressing position for a certain time interval after the initial pressing step is possible, which is especially effective when pressing workpieces made of aluminum, and the pressing cycle for different kinds of materials can be chosen at will.

In Figure 2, the internally toothed ring gear 14 may be in mesh with a second planet gear arranged coaxially and integral with the or each planet gear 13. In this case, the following equation applies:${\text{N}}_{\text{d}} \text{= (1 +} \frac{{\text{Z}}_{\text{1}} {\text{· Z}}_{\text{4}}}{{\text{Z}}_{\text{3}} {\text{· Z}}_{\text{2}}} {\text{) x N}}_{\text{p}} \text{-} \frac{{\text{Z}}_{\text{1}} {\text{· Z}}_{\text{4}}}{{\text{Z}}_{\text{3}} {\text{· Z}}_{\text{2}}} {\text{x N}}_{\text{s}}$ where Z₄ is a number of teeth of the second planetary gear.

Figure 3 shows a second embodiment of the present invention which is similar to the first embodiment except that the power take-off gear 5 is attached to the outer periphery of the internally toothed ring gear 14, which constitutes the output of the planetary gearing 19, and a carrier 21 for the ring gear 14 is connected through a hollow shaft 22 to the brake 11 and the second shaft section 4b connected to the planet carrier 20 of the planet gear 13 is arranged to be driven by the servo motor 18.

In the second embodiment, the following equation applies:${\text{N}}_{\text{d}} \text{=} \frac{{\text{N}}_{\text{p}}}{\text{1 +} \frac{{\text{Z}}_{\text{1}}}{{\text{Z}}_{\text{3}}}} \text{x} \frac{{\text{N}}_{\text{s}}}{\text{1 +} \frac{{\text{Z}}_{\text{3}}}{{\text{Z}}_{\text{1}}}}$ where Nₛ is the rotational velocity of the first shaft section 4a;
N_{d} is the rotational velocity of the second shaft section 4b driven by the servo motor 18;
Nₚ is the rotational velocity of the internally toothed ring gear 14 of the gearing 19;
Z₁ is the number of teeth on the sun gear 15;
Z₂ is the number of teeth on the planet gear 13; and
Z₃ is the number of teeth on the ring gear 14.

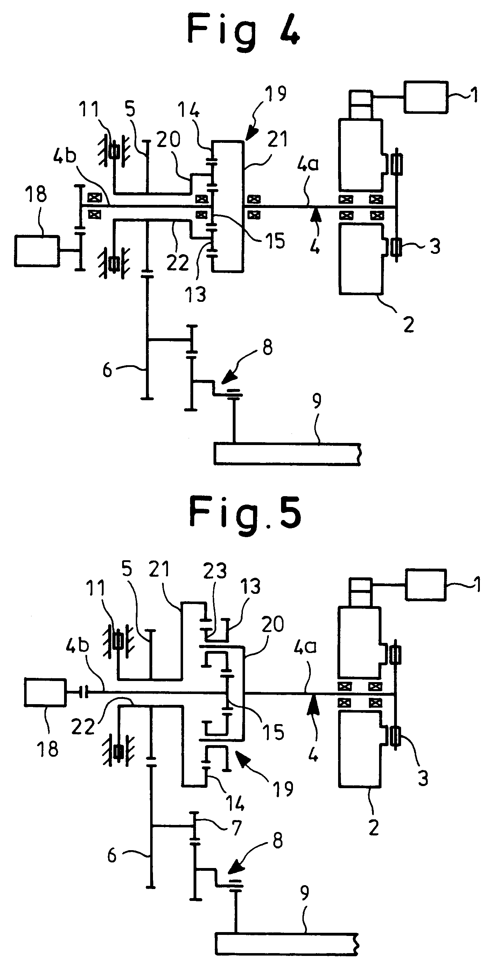

Therefore, based on equation (3), in normal operation where ${\text{N}}_{\text{p}} {\text{= N}}_{\text{s}}$, the rotational velocity of the planet carrier 20 is to be controlled through the second shaft section 4b by the servo motor 18 such that ${\text{N}}_{\text{d}} {\text{= N}}_{\text{s}}$. When the servo motor 18 is stopped (N_{d} = 0), the following is derived from the equation (3):${\text{N}}_{\text{p}} \text{=} \frac{{\text{Z}}_{\text{1}}}{{\text{Z}}_{\text{3}}} {\text{x N}}_{\text{s}}$ and under this condition the drive force is received by the power take-off gear 5. When the press operation is to be stopped (Nₚ = 0), based on the equation (3), the rotational velocity of the carrier 20 is to be controlled by the servo motor 18 such that the following equation is satisfied:${\text{N}}_{\text{d}} \text{=} \frac{{\text{Z}}_{\text{1}}}{{\text{Z}}_{\text{1}} {\text{+ Z}}_{\text{3}}} {\text{x N}}_{\text{s}}$ In Figure 3, the internally toothed ring gear 14 may be in mesh with a second planet gear arranged coaxially and integral with the or each planet gear 13; alternatively, the power take-off gear 5 may be mounted on the hollow shaft 22. Then, the following equation applies:${\text{N}}_{\text{d}} {\text{= N}}_{\text{p}} \text{x} \frac{\text{1}}{\text{1 +} \frac{{\text{Z}}_{\text{1}} {\text{·Z}}_{\text{4}}}{{\text{Z}}_{\text{2}} {\text{·Z}}_{\text{3}}}} {\text{+ N}}_{\text{s}} \text{x} \frac{\text{1}}{\text{1 +} \frac{{\text{Z}}_{\text{2}} {\text{·Z}}_{\text{3}}}{{\text{Z}}_{\text{1}} {\text{·Z}}_{\text{4}}}}$ Figure 4 shows a third embodiment of the present invention which is similar to the second embodiment except that the first shaft section 4a is connected to the carrier 21 of the internally toothed ring gear 14, the second shaft section 4b is connected to the sun gear 15, the power take-off gear 5 and the brake 11 are connected by a hollow shaft 22 to the planet carrier 20. The servo motor 18 is connected to drive the second shaft section 46.

In the third embodiment, rotation of an element of the planetary gear 19, in this case the sun gear 15, is controlled by the servo motor 18 so that the working velocity of the slide 9 can be freely controlled, as in the first and second embodiments.

Also in Figure 4, the internally toothed ring gear 14 may be in mesh with a second planet gear arranged coaxial and integral with the planet gear 13.

Figure 5 shows a fourth embodiment which is similar to the third embodiment shown in Figure 4 except that the planet gear 13 is a first planet gear and a second planet gear 23 is coaxial and integral with it. The carrier 20 for the planet gears 13 and 23 is connected to the first shaft section 4a, the second planet gear 23 is in mesh with the internally toothed ring gear 14, the carrier 21 of the ring gear 14 is mounted on the hollow shaft 22 and the ring gear 14 acting as the output. The servo motor 18 again acts on the second shaft section 4b.

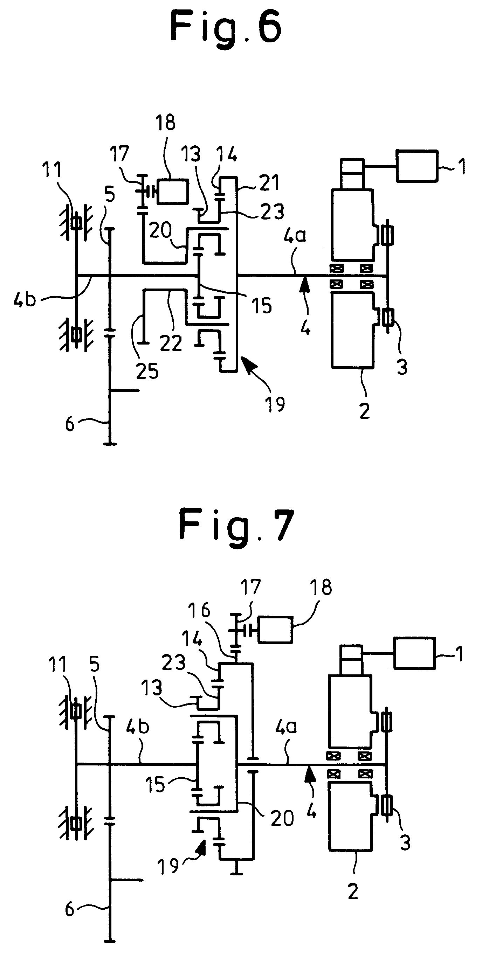

Figure 6 shows a fifth embodiment which is similar to the first embodiment shown in Figure 2 except that the planet gear 13 is a first planet gear and a second planet gear 23 is arranged coaxial and integral with the first planet gear 13. The internally toothed ring gear 14 is in mesh with the second planet gear 23 and the carrier 21 of the ring gear 14 is connected to the first shaft section 4a. The sun gear 15 is connected to the second shaft section 4b and the carrier 20 of the planet gears 13 and 23 are connected to a hollow shaft 22 around the shaft section 4b. The shaft 22 carries a gear 25 which is in mesh with a pinion 17 driven by the servo motor 18. The sun gear 15 acting as the output.

Figure 7 shows a sixth embodiment which is again similar to the first embodiment except that the planet gear 13 is a first planet gear and a second planet gear 23 is arranged coaxial and integral with the first planet gear 13, and is in mesh with the internally toothed ring gear 14. The sun gear 15 being connected to the second shaft section 4b and acts as the output.

The fourth to sixth embodiment shown in Figures 5 to 7, result in similar effects and advantages as those produced in the first to third embodiments shown in Figures 2 to 4.

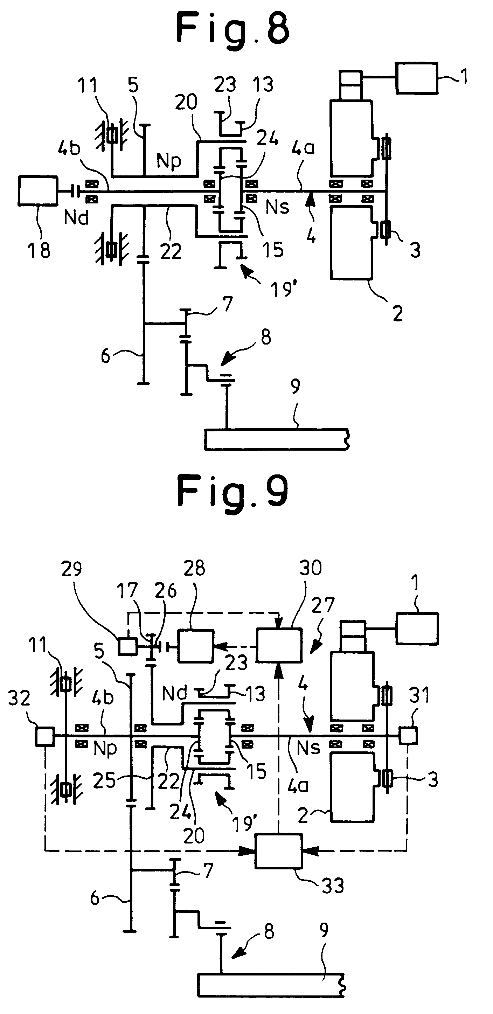

Figures 8 to 13 show modifications of the first to sixth embodiments shown in Figures 2 to 7, respectively, but a planetary gearing 19' having a second sun gear 24 is used in place of the planetary gearing 19 having the internally toothed ring gear 14.

More specifically, Figure 8 shows a seventh embodiment which is a modification and development of the first embodiment shown in Figure 2. Arranged between the shaft sections 4a and 4b is planetary gearing 19' having first and second sun gears 15 and 24 and one or more sets of first and second planet gears 13 and 23 coaxial and integral with each other and respectively in mesh with the gears 15 and 24. The first sun gear 15 is connected to the first shaft section 4a, the second sun gear 24 is connected to one end of the shaft section 4b and the carrier 20 of the planet gears 13 and 23 is connected to a hollow shaft 22 around the second shaft section 4b. The power take-off gear 5 and the brake 11 are mounted on the hollow shaft 22. The other end of the shaft section 4b is connected to the servo motor 18.

In the above construction, the following relationship applies:${\text{N}}_{\text{d}} \text{=} \frac{\text{1}}{\text{1 -} \frac{{\text{Z}}_{\text{1}} {\text{·Z}}_{\text{4}}}{{\text{Z}}_{\text{2}} {\text{·Z}}_{\text{5}}}} {\text{x N}}_{\text{p}} \text{+} \frac{{\text{Z}}_{\text{1}} {\text{·Z}}_{\text{4}}}{{\text{Z}}_{\text{2}} {\text{·Z}}_{\text{5}}} {\text{x N}}_{\text{s}}$ where Nₛ is the rotational velocity of the first shaft section 4a;
N_{d} is the rotational velocity of the second shaft section 4b by the servo motor 18;
Nₚ is the rotational velocity of the hollow shaft 22 which is equal to the rotational velocity of the planet gears 13 and 23, which constitute the output;
Z₁ is the number of teeth of the first sun gear 15;
Z₂ is the number of teeth of the first planet gear 13;
Z₄ is the number of teeth of the second planet gear 23; and
Z₅ is the number of teeth of the second sun gear 24. As before, the working velocity of the slide 9 can be freely controlled by controlling the rotational velocity of the servo motor 18.

Figure 9 shows an eighth embodiment which is a modification and development of the second embodiment shown in Figure 3. Arranged between the first and second shaft sections 4a and 4b is the planetary gearing 19' comprising the first and second sun gears 15 and 24 and the coaxial and integral planet gears 13 and 23 in mesh with the sun gears 15 and 24, which are respectively connected to the shaft sections 4a and 4b. The rotational energy of the flywheel 2 is transmitted from the first shaft section 4a through the planetary gearing 19' to the power take-off gear 5, which is connected to the second shaft section 4b. A gear 25 is mounted on the hollow shaft 22 extending around the shaft section 4b and connected to the carrier 20 of the planet gears 13 and 23. The gear 25 meshes with a pinion 17 carried by a shaft 26 which is connected to a variable torque brake 28 which is actuated or controlled by instructions from a control unit 27. The rotational velocity of the output gear 5 can be varied through the sun gear 24, which constitutes the output, by controlling the common rotational velocity of the planet gears 13 and 23 by actuation of the variable torque brake 28 thereby enabling free control of the working velocity of the slide 9, which is vertically displaced by the slide drive 8.

The control unit 27 comprises a brake controller 30, which is arranged to receive a feedback signal from a rotary encoder 29, which acts as a speedmeter on the shaft 26 of the pinion 17 and which sends a drive signal to the variable torque brake 28, and a press controller 33 which sends a working signal to the brake controller 30 on the basis of signals from rotary encoders 31 and 32, which constitute speedmeters on the shaft sections 4a and 4b, respectively.

In the eighth embodiment, when the clutch 3 is engaged with the rotating flywheel 2 driven by the motor 1, the rotational energy of the flywheel 2 passes through the clutch 3 to the first shaft section 4a and is transmitted through the planetary gearing 19' to the second shaft section 4b and then to the slide drive 8 via the power take-off gear 5. The common rotational velocity of the planet gears 13 and 23 is controlled by the variable torque brake 28 so that the rotational velocity of the power take-off gear 5 and thus the speed of the slide 9 during a working stroke can be freely varied. Based on the rotational velocity of the first shaft section 4a detected by the rotary encoder 31, the press controller 33 sends instructions to the brake controller 30 which in turn sends instructions to actuate the variable torque brake 28 to control the common rotational velocity of the planet gears 13 and 23 and vary the rotational velocity of the power take-off gear 5. The rotational velocities of the pinion 17 and power take-off gear 5, which are detected respectively by the rotary encoders 29 and 32, are respectively fed back to the brake controller 30 and press controller 33.

In the above construction, the following relationship applies:${\text{N}}_{\text{d}} {\text{= N}}_{\text{p}} \text{x} \frac{\text{1}}{\text{1 -} \frac{{\text{Z}}_{\text{1}} {\text{·Z}}_{\text{4}}}{{\text{Z}}_{\text{2}} {\text{·Z}}_{\text{5}}}} {\text{+ N}}_{\text{s}} \text{x} \frac{\text{1}}{\text{1 -} \frac{{\text{Z}}_{\text{2}} {\text{·Z}}_{\text{5}}}{{\text{Z}}_{\text{1}} {\text{·Z}}_{\text{4}}}}$ where Nₛ is the rotational velocity of the first shaft section 4a;
Nₚ is the rotational velocity of the second shaft section 4b;
N_{d} is the common rotational velocity of the planet gears 13 and 23, i.e. the rotational velocity of the hollow shaft 22;
Z₁ is the number of teeth of the first sun gear 15;
Z₂ is the number of teeth of the first planet gear 13;
Z₄ is the number of teeth of the second planet gear 23; and
Z₅ is the number of teeth of the second sun gear 24.

Therefore, based on the above equation, in normal operation, the equation ${\text{N}}_{\text{p}} {\text{= N}}_{\text{s}}$ will be satisfied by controlling the common rotational velocity of the planet gears 13 and 23 by the variable torque brake 28 such that ${\text{N}}_{\text{d}} {\text{= N}}_{\text{s}}$.

When the brake 28 is fully applied (N_{d} = 0), then based on the above equation,${\text{N}}_{\text{p}} {\text{= N}}_{\text{s}} \text{x} \frac{{\text{Z}}_{\text{1}} {\text{·Z}}_{\text{4}}}{{\text{Z}}_{\text{2}} {\text{·Z}}_{\text{5}}}$ When the press operation is to be stopped, i.e. when the slide 9 is to be stopped, the relation Nₚ = 0 is obtained by controlling the common rotational velocity of the planetary gears 13 and 23 by means of the variable torque brake 28 such that${\text{N}}_{\text{d}} {\text{= N}}_{\text{s}} \text{x} \frac{\text{1}}{\text{1 -} \frac{{\text{Z}}_{\text{2}} {\text{·Z}}_{\text{5}}}{{\text{Z}}_{\text{1}} {\text{·Z}}_{\text{4}}}}$ Thus, in the eighth embodiment, the rotation of the planetary gearing 19' is controlled by the variable torque brake 28 so that the working velocity of the slide 9 can be freely controlled during a working stroke of the slide 9. As a result, the pressure can be held for a certain time after the initial pressing action, which is especially effective when pressing workpieces are made of aluminum. After pressing, the pressing members can be returned to their waiting or inoperative position. Pressing can be effected as desired for different kinds of materials.

In Figure 9, a servo motor 18 may be used in place of the variable torque brake 28.

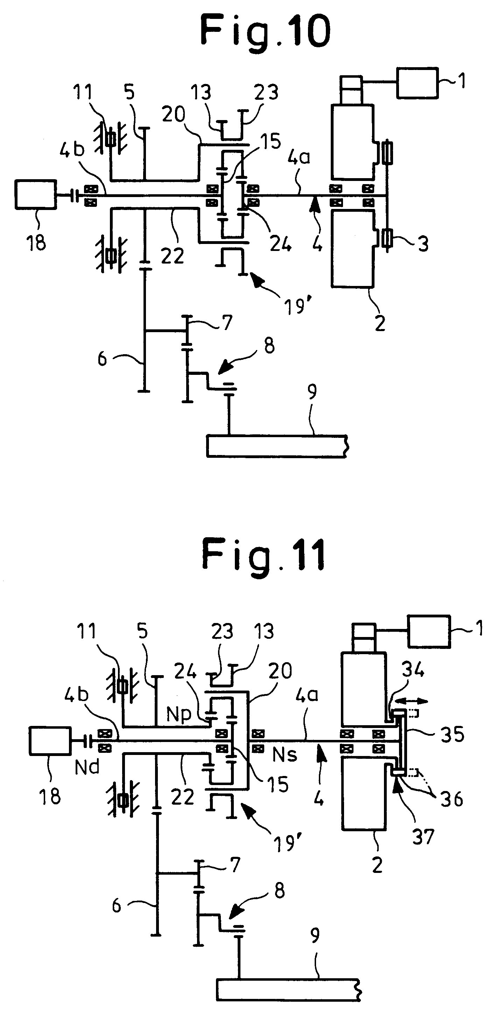

Figure 10 shows a ninth embodiment of the present invention which is a modification of the third embodiment shown in Figure 4 and which is similar to the seventh embodiment shown in Figure 8 except that the positions of the first and second sun gears 15 and 24 are reversed and the positions of the first and second planet gears 13 and 23 are reversed. More specifically, the first sun gear 15 in mesh with the first planet gear 13 is connected to the second shaft section 4b while the second sun gear 24 in mesh with the second planet gear 23 is connected to the first shaft section 4a.

The effects and advantages of the ninth embodiment are similar to those obtained in the seventh embodiment.

Figure 11 shows a tenth embodiment of the present invention which is a modification and development of the fourth embodiment shown in Figure 5. Arranged between the flywheel 2 and the first shaft section 4a is a gear coupling 37 comprising a ring gear 34 connected to a side edge of the flywheel 2, a gear 35 opposed to the gear 34 and attached to the first shaft section 4a and an internally toothed ring 36 adapted to be moved axially between the position shown in solid lines in which it meshes with the outer peripheries of the gears 34 and 35 and thus rotationally connects them and the position shown in dotted lines in which it does not . The rotation of the flywheel 2 is thus selectively transmitted through the gear coupling 37 to the power transmission shaft 4.

The planetary gearing 19' is arranged between the shaft sections 4a and 4b. The carrier 20 of the planet gears 13 and 23 is connected to the first shaft section 4a. The first sun gear 15 is connected to one end of the second shaft section 4b. The power take-off gear 5 is connected by a hollow shaft 22 to the second sun gear 24. A servo motor 18 is connected to the other end of the second shaft section 4b. As a result, the rotation of the power take-off gear 5 can be controlled through the planetary gearing 19' by the servo motor 18. The hollow shaft 22 is provided with the brake 11.

Now, with the flywheel 2 being separated from the first shaft section 4a by the gear coupling 37, the motor 1 is driven at a predetermined rotational speed while rotation of the second sun gear 24, which constitutes the output of the planetary gearing 19', is stopped by the action of the brake 11 on the hollow shaft 22. When the servo motor 18 is driven under these conditions, the planet gears 13 and 23 are rotated in unison around the sun gears 15 and 24 and the first shaft section 4a is rotated. The rotational velocity of the servo motor 18 is controlled such that the first shaft section 4a is rotated at the same rotational velocity as that of the flywheel 2. The gears 34 and 35 can now be interconnected without difficulty since they are rotating at the same speed. At the start of the press operation, the brake 11 is disengaged and the servo motor 18 is driven so that the first sun gear 15 is rotated to control the rotation of the planetary gears 13 and 23 whereby the rotation transmitted from the second sun gear 24 through the hollow shaft 22 to the power take-off gear 5 can be freely varied.

In the above construction, the following relationship applies:${\text{N}}_{\text{d}} \text{=} \frac{{\text{Z}}_{\text{2}} {\text{·Z}}_{\text{5}}}{{\text{Z}}_{\text{1}} {\text{·Z}}_{\text{4}}} {\text{x N}}_{\text{p}} \text{- (} \frac{{\text{Z}}_{\text{2}} {\text{·Z}}_{\text{5}}}{{\text{Z}}_{\text{1}} {\text{·Z}}_{\text{4}}} {\text{- 1) x N}}_{\text{s}}$ where Nₛ is the rotational velocity of the first shaft section 4a;
N_{d} is the rotational velocity of the second shaft section 4b;
Nₚ is the rotational velocity of the second sun gear 24, which represents the output of the planetary gearing 19';
Z₁ is the number of teeth of the first sun gear 15;
Z₂ is the number of teeth of the first planet gear 13;
Z₄ is the number of teeth of the second planet gear 23; and
Z₅ is the number of teeth of the second sun gear 24.

The movement of the slide 9, which is displaced by the slide drive 8, can thus be freely controlled by controlling N_{d}. More specifically, at the start of the operation, the flywheel 2 is rotated at a predetermined velocity Nₛ with the gear coupling 37 disengaged and the brake 11 on. The servo motor 18 is then rotated at a speed N_{d} which satisfies the equation Nₚ = 0. Press operation is prevented because the brake 11 is on and the first shaft section 4a is rotated at the same velocity as Nₛ. Since the flywheel 2 is rotating at the same velocity as the first shaft section 4a, the gear coupling 37 can be actuated to interconnect the gears 34 and 35 with no mechanical shock. The preparation is thus complete and at the commencement of press operation the brake 11 is disengaged and at the same time the servo motor 18 is actuated to make the value of N_{d} move towards a predetermined value Nₚ. Thus, the slide 9 smoothly starts to move.

In this manner, movement and stopping of the slide 9 after the start of press operation can be effected by operation of the servo motor 18 and the brake 11 so that the flywheel 2 can be maintained always connected to the first shaft section 4a. As a result, the gear coupling 37, which requires no connection pads, can be used between the flywheel 2 and the power transmission shaft 4.

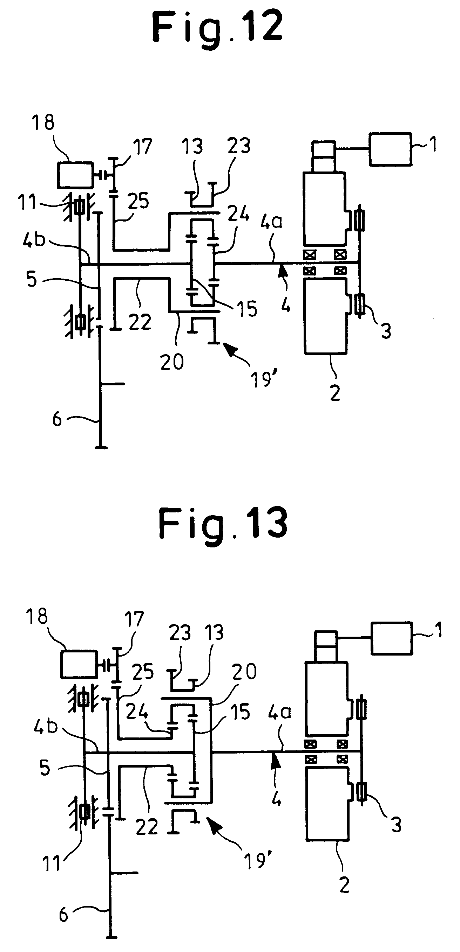

Figures 12 and 13 show eleventh and twelfth embodiments, respectively, which are modifications of the fifth and sixth embodiments shown in Figures 6 and 7, respectively. The eleventh embodiment shown in Figure 12 is similar to the eighth embodiment shown in Figure 9 except that the first sun gear 15 is connected to the second shaft section 4b and the second sun gear 24 is connected to the first shaft section 4a. The output gear 5 is connected to the second shaft section 4b and a servo motor 18 is connected to the planet carrier 20 by means of a hollow shaft 22. In the twelfth embodiment shown in Figure 13, the first sun gear 15 is connected to the second shaft section 4b, the second sun gear 24 is mounted on the hollow shaft 22 and the carrier 20 of the planet gears 13 and 23 is connected to the first shaft section 4a. The output gear 5 is connected to the second shaft section 4b and a servo motor 18 is arranged to rotate the shaft 22.

In the first to twelfth embodiments respectively shown in Figures 1 to 13, the combinations of the respective gears of the planetary gearing with the shafts of the servo motor 18, flywheel 2 and power take-off gear 5 are as shown in Table 1 below. In this Table, R denotes the externally toothed ring gear 14; P, at least one of the planet gears 13 and 23; S₁, the first sun gear; and S₂, the second sun gear 24.

**Table 1**

| | shaft of servo motor | shaft of flywheel | shaft of power take-off gear |
|---|---|---|---|
| 1st embodiment | R | S₁ | P |
| 2nd embodiment | P | S₁ | R |
| 3rd embodiment | S₁ | R | P |
| 4th embodiment | S₁ | P | R |
| 5th embodiment | P | R | S₁ |
| 6th embodiment | R | P | S₁ |
| 7th embodiment | S₂ | S₁ | P |
| 8th embodiment | P | S₁ | S₂ |
| 9th embodiment | S₁ | S₂ | P |
| 10th embodiment | S₁ | P | S₂ |
| 11th embodiment | P | S₂ | S₁ |
| 12th embodiment | S₂ | P | S₁ |

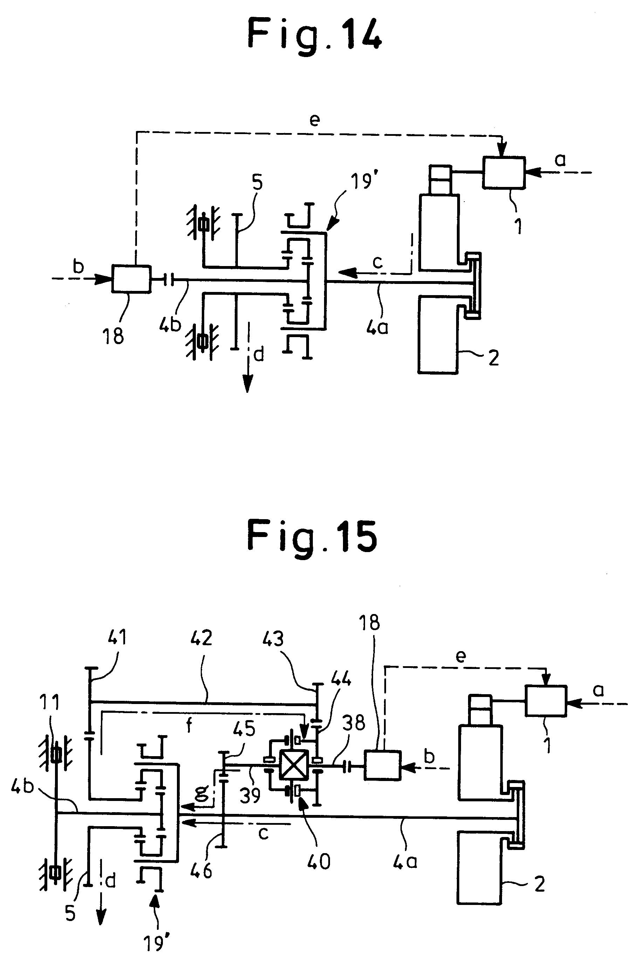

Figure 14 shows the flows of electrical power by means of arrows a, b and e and the flows of mechanical power by means of arrows c and d during operation of the tenth embodiment. More specifically, for example, when low-speed pressing, all of the energy from the flywheel 2 is not consumed and most of it is converted into electrical power by the servo motor 18 and is returned to the power source so that the braking force of the servo motor 18 is increased. If it is supposed that the power (arrow a) of the main motor 1 is 1 kw, then the power (arrow b) flowing from the exterior to the servo motor 18 is 0 kw and the electrical power (arrow e) which is generated and returned is 76 kw. The power (arrow c) transmitted from the flywheel 2 to the planetary gearing 19' amounts to 77 kw which is the sum of the returned power of 76 kw and the power of 1 kw which is consumed by the motor 1 to operate the press. The servo motor 18 will therefore require to have a power rating of 76 kw. If the slide is stopped at its bottom dead centre position, the power for d is 0 kw so that the power for e is 77 kw (maximum). When pressing with deceleration to 1/2, the power distribution is 46.2 kw for a, 0 kw for b, 77 kw for c, 46.2 kw for d and 30.8 kw for e so that the servo motor 18 requires a power rating of 30.8 kw. Furthermore, in operation with no deceleration (i.e. normal press operation with no acceleration and deceleration), the power distribution is 77 kw for a, 15.4 kw for b, 77 kw for c and 92.4 kw for d (which is sum of the power from b and the power from c).

Thus at low speed press operation, a maximum electrical power of 76 kw is returned from the servo motor 18 to the power source so that the servo motor 18 is braked with an increased torque corresponding to this maximum, which requires the servo motor to be of increased size.

The fourteenth embodiment shown in Figure 15 is designed to minimise the braking force required for the servo motor 18. In this embodiment, energy from the flywheel 2 is returned as mechanical energy, in distinction from the tenth embodiment where it is returned as electrical energy. In order to return the mechanical power taken from the output section of the planetary gearing 19' to the input section, arranged adjacent to the first shaft section 4a, which is the input of the planetary gearing 19', is a differential gear 40 whose side gear shafts 38 and 39 are parallel to the first shaft section 4a. A power transmission gear 41 is in mesh with the power take-off gear 5. A drive gear 43 is mounted on a shaft 42 on which the power transmission gear 41 is also mounted. The drive gear 43 is in mesh with a carriage gear 44 of the differential gear 40. One of the side shafts, i.e. the side shaft 38 is connected to the servo motor 18 while a pinion 45 is mounted on the other side shaft 39. A gear 46 is arranged midway along the first shaft section 4a and is in mesh with the pinion 45.

Part of the mechanical power taken at the output side of the planetary gearing 19' by the power take-off gear 5 is returned through the transmission gear 41, the shaft 42, the drive gear 43, the differential gear 40, the pinion 45, the gear 46 and the first shaft section 4a to the planetary gearing 19' so that the servo motor 18 may be of low power and the velocity reduction ratio may be selected so as to minimise the power rating required for velocity control.

More specifically, in low-speed press operation, let the power distribution be 0 kw for a and b, 46.2 kw for c and 1 kw for d. Then, the power of 76 kw mechanically returned from the power take-off gear 5 to the differential gear 40 along the path of arrow f in Figure 15 is distributed by the differential gear 40 so that mechanical power of 30.8 kw is returned along the path of arrow g to the planetary gearing 19' and electrical power of 45.2 kw is returned from the servo motor 18, as indicated by arrow e, to the power source. Therefore, the sum of the powers of c and g is fed to the planetary gearing 19', the power of 1 kw being consumed for d, the remaining power of 76 kw being mechanically returned to the differential gear 40. This means that, for the servo motor 18 which requires 76 kw in the twelfth embodiment shown in Figure 13, a power of 45.2 kw will suffice. In press operation with deceleration to 1/2, let the power distribution be 46.2 kw for a, 0 kw for b, 46.2 kw for c and 46.2 kw for d. Then, a power of 30.8 kw for f is mechanically returned from the planetary gearing 19' to the differential gear 40 and is circulated through g so that the power for e is 0 kw and the power of the servo motor becomes zero. In operation with no deceleration, a power of 46.2 kw for a is transmitted through c to d and the power of 46.2 kw for b is split at the differential gear 40 into 15.4 kw for f (in the direction opposite to that above) and 30.8 kw for g and summed with the value for c to become 92.4 kw for d. Therefore, the power for e is 0 kw.

As is clear from the above, when considering all the operational modes, in contrast to the thirteenth embodiment shown in Figure 14 where the maximum power required is 77 kw, the fourteenth embodiment will cope with maximum power of 46.2 kw and thus the servo motor 18 need have a capacity of only 60% of that of the thirteenth embodiment.

The input and output sections of the differential gear 40 and the connection to the servo motor 18 have been described or being the carriage gear 44, the side gear 39 and the side gear 38, respectively. However, these relationships may be freely interchanged.

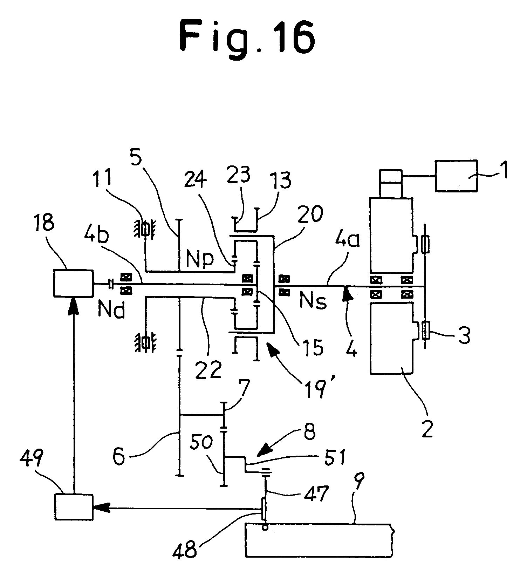

Figure 16 shows a fifteenth embodiment which is substantially similar to the tenth embodiment shown in Figure 11 but further comprises a load cell 48 on a crank lever 47 of the slide drive 8 for detecting the reaction load acting on the slide 9. The load cell 48 is connected to a controller 49. When the load cell 48 detects on overload, instructions are sent from the controller 49 to the servo motor 18 to trip the motor 18 which is thus disabled. Reference numeral 50 denotes the main gear for the slide drive 8 and 51 denotes a crank arm.

Once the servo motor 18 is tripped, any overload will not act on the die and/or slide drive 8, thereby protecting the machinery.

In the above, the combination of the planetary gearing 19', the servo motor 18 and the load cell 48 which protects the machinery are non-hydraulic systems. In comparison with the prior art having a hydraulic system to prevent any overload, the construction of the present invention is much simpler and easier to maintain.

It will be understood that the present invention is not limited to the embodiments described above and that various modifications may be made within the scope of the present invention. For example, the gear coupling 37 of the tenth embodiment shown in Figure 11 may be also used in other embodiments. The above description relates to control of the slide drive 8 only; the transmission of power to the workpiece transport drive 12 (see Figure 1) may be effected from the output of the power transmission of the present invention or alternatively it may be also controlled in a similar manner. In relation to the fifteenth embodiment shown in Figure 16, the description is restricted to the load detected by the load cell 48 being an overload, resulting in the servo motor 18 tripped by the controller 49; instead, the servo motor 18 may be driven at a rotational speed such that press velocity becomes zero.

## Claims

1. A power transmission for a mechanical press for transmitting the rotational energy of a flywheel (2) driven by a motor (1) to a slide drive (8) of the mechanical press, the transmission including a transmission shaft (4) of which one end is adapted to be connected to the flywheel (2) and the other end is connected to a power take-off gear (5) for connection to the slide drive (8), the transmission shaft (4) including planetary gearing (19) comprising three elements, a sun gear (15), one or more planet gears (13) in mesh with the sun gear (15) and connected to a common planet carrier (20) and an internally toothed ring gear (14) in mesh with the or each planet gear (13), a portion (4a) of the transmission shaft which is adapted to be connected to the flywheel (2) being connected to one of the said elements and speed control means (18; 28) being connected to another of the said elements and arranged to adjust its speed and thus to adjust the speed of the power take-off gear, characterised in that the power take-off gear (5) is connected to rotate with the third of the said elements.

2. A power transmission for a mechanical press for transmitting the rotational energy of a flywheel (2) driven by a motor (1) to a slide drive (8) of the mechanical press, the transmission including a transmission shaft (4) of which one end is adapted to be connected to the flywheel (2) and the other end is connected to a power take-off gear (5) for connection to the slide drive (8) the transmission shaft (4) including planetary gearing (19') comprising three elements (15;24;13,23,20), a portion (4a) of the transmission shaft which is adapted to be connected to the flywheel (2) being connected to one of the said elements and speed control means (18; 28) being connected to another of the said elements and arranged to adjust its speed and thus to adjust the speed of the power take-off gear, characterised in that the three elements of the planetary gearing comprise a first sun gear (15), a second sun gear (24) and one or more sets of two connected planet gears (13, 23) in mesh with respective sun gears (15, 24) and connected to a common planet carrier (20), and that the power take-off gear (5) is connected to rotate with the third of the said elements.

3. A power transmission as claimed in Claim 1 or Claim 2 characterised in that the speed control means is a servo motor (18).

4. A power transmission as claimed in Claim 1 or Claim 2 characterised in that the speed control means is a variable torque brake (28).

5. A power transmission as claimed in Claim 4 characterised by a control unit (27) including a brake controller (30) arranged to supply a control signal to the variable torque brake (28), a speedmeter (31) on the section (4a) of the transmission shaft which is adapted to be connected to the flywheel (2) and a press controller (33) arranged to supply a working signal to the brake controller (30) which is a function of the magnitude of the signal produced by the speedmeter (31).

6. A power transmission as claimed in Claim 3 characterised by a differential gear (40) whose power input (44) is connected to be rotated with the power take-off gear (5), and one of whose power outputs (39) is connected to transmit rotational power to the portion (4a) of the transmission shaft and the other of whose power outputs (38) is connected to the servo motor (18).

7. A power transmission as claimed in Claim 3 or 6 including a flywheel (2) characterised by a brake (1) arranged to prevent rotation of the power take-off gear (5) and an on-off coupling (37) arranged between the flywheel (2) and the transmission shaft (4a).

8. A power transmission as claimed in Claim 7 in which the on-off coupling (37) is a gear coupling.

9. A mechanical press including a slide drive for moving the pressing member and a power transmission as claimed in Claim 3 or any one of Claims 6 to 8, the power take-off gear being connected to the slide drive, characterised by a load cell (48) on the slide drive (8) arranged to detect an overload applied to the slide and to supply a signal indicative thereof to the servo motor (18).

## Patentansprüche

1. Antriebseinrichtung für eine mechanische Presse zum Übertragen der Rotationsenergie eines durch einen Motor (1) angetriebenen Schwungrades (2) auf einen Schlittenantrieb (8) der mechanischen Presse, wobei die Antriebseinrichtung eine Übertragungswelle (4) umfaßt, deren eines Ende mit dem Schwungrad (2) verbindbar und deren anderes Ende mit einem Abtriebszahnrad (5) zum Verbinden mit dem Schlittenantrieb (8) verbunden ist, und wobei die Übertragungswelle (4) ein drei Elemente, nämlich ein Sonnenrad (15), ein oder mehrere mit dem Sonnenrad (15) kämmende und mit einem gemeinsamen Planetenträger (20) verbundene Planetenräder (13) und ein mit dem oder jedem Planetenrad (13) innenverzantes Ringzahnrad (14) umfassendes Planetengetriebe (19) umfaßt, ein Abschnitt (4a) der Übertragungswelle, der so ausgebildet ist, daß er mit dem Schwungrad (2) verbindbar ist, mit einem dieser Elemente verbunden ist und wobei Geschwindigkeitseinstellmittel (18; 28) mit einem anderen der Elemente verbunden und so angeordnet sind, daß sie seine Geschwindigkeit und damit die Geschwindigkeit des Abtriebszahnrades einstellen, dadurch gekennzeichnet, daß das Abriebszahnrad (5) so angeschlossen ist, daß es mit dem dritten der Elemente rotiert.

2. Antriebseinrichtung für eine mechanische Presse zum Übertragen der Rotationsenergie eines durch einen Motor (1) angetriebenen Schwungrades (2) auf einen Schlittenantrieb (8) der mechanischen Presse, wobei die Antriebseinrichtung eine Übertragungswelle (4) umfaßt, deren eines Ende mit dem Schwungrad (2) verbindbar und deren anderes Ende mit einem Abtriebszahnrad (5) zum Verbinden mit dem Schlittenantrieb (8) verbunden ist, wobei die Übertragungswelle (4) ein drei Elemente (15; 24; 13, 23, 20) umfassendes Planetengetriebe (19') umfaßt, ein Abschnitt (4a) der Übertragungswelle, der so ausgebildet ist, daß er mit dem Schwungrad (2) verbindbar ist, mit einem dieser Elemente verbunden ist und wobei Geschwindigkeitseinstellmittel (18; 28) mit einem anderen der Elemente verbunden und so angeordnet sind, daß sie seine Geschwindigkeit und damit die Geschwindigkeit des Abtriebszahnrades einstellen, dadurch gekennzeichnet, daß die drei Elemente des Planetengetriebes ein erstes Sonnenrad (15), ein zweites Sonnenrad (24) und einen oder mehrere Sätze von zwei miteinander verbundenen Planetenräder (13, 23) umfassen, die mit entsprechenden Sonnenrädern (15, 24) kämmen und mit einem gemeinsamen Planetenträger (20) verbunden sind, und daß das Abtriebszahnrad (5) so angeschlossen ist, daß es mit dem dritten der Elemente rotiert.

3. Antriebseinrichtung nach Anspruch 1 oder 2, dadurch gekennzeichnet, daß das Geschwindigkeitseinstellmittel ein Servomotor (18) ist.

4. Antriebseinrichtung nach Anspruch 1 oder 2, dadurch gekennzeichnet, daß das Geschwindigkeitseinstellmittel eine Bremse (28) mit veränderlichem Drehmoment ist.

5. Antriebseinrichtung nach Anspruch 4, gekennzeichnet durch eine Steuereinheit (27) umfassend eine Bremssteuerung (30), die so ausgebildet ist, daß sie der Bremse (28) mit veränderlichem Drehmoment ein Steuersignal zuführt, einen Geschwindigkeitsmesser (31) auf dem Abschnitt (4a) der Übertragungswelle, der so ausgebildet ist, daß er mit dem Schwungrad (2) verbindbar ist, und eine Pressensteuerung (33), die so ausgebildet ist, der Bremssteuerung (30) ein Arbeitssignal zuzuführen, das eine Funktion der Größe des von dem Geschwindigkeitsmesser (31) erzeugten Signals ist.

6. Antriebseinrichtung nach Anspruch 3, gekennzeichnet durch ein Differentialgetriebe (40), dessen Leistungseingang (44) so angeschlossen ist, daß er mit dem Abtriebszahnrad (5) rotiert, einer von dessen Leistungsabgängen (39) so angeschlossen ist, daß er Drehkraft auf den Abschnitt (4a) der Übertragungswelle überträgt, und dessen anderer Leistungsabgang mit dem Servomotor (18) verbunden ist.

7. Antriebseinrichtung nach Anspruch 3 oder 6, umfassend ein Schwungrad (2), gekennzeichnet durch eine Bremse (1) zum Verhindern einer Rotation des Abtriebszahnrades (5) und eine zwischen dem Schwungrad (2) und der Übertragungswelle (4a) angeordnete Ein-Aus-Kupplung (37).

8. Antriebseinrichtung nach Anspruch 7, dadurch gekennzeichnet, daß die Ein-Aus-Kupplung (37) eine Zahnkupplung ist.

9. Mechanische Presse mit einem Schlittenantrieb zum Bewegen des Pressengliedes und einer Antriebseinrichtung nach Anspruch 3 oder einem der Ansprüche 6 bis 8, wobei das Abtriebszahnrad mit dem Schlittenantrieb verbunden ist, gekennzeichnet durch eine Kraftmeßdose (48) auf dem Schlittenantrieb (8), die so angeordnet ist, das sie eine auf den Schlitten aufgebrachte Überlast erkennt und ein dieses anzeigendes Signal an den Servomotor (18) abgibt.

## Revendications

1. Transmission de puissance destinée à une presse mécanique pour transmettre l'énergie de rotation d'un volant (2) entraîné par un moteur (1) à un entraînement (8) du coulisseau de la presse mécanique, la transmission comprenant un arbre de transmission (4) dont une extrémité est susceptible d'être reliée au volant (2) et dont l'autre extrémité est reliée à une roue dentée de prise de force (5) en vue de sa liaison avec l'entraînement (8) du coulisseau, l'arbre de transmission (4) présentant un train planétaire (19) qui comprend trois éléments, à savoir une roue planétaire (15), un ou plusieurs satellites (13) qui engrènent avec la roue planétaire (15) et qui sont reliés à un porte-satellites commun (20), et une couronne (14) à denture intérieure qui engrène avec le satellite (13) ou avec chacun d'eux, une partie (4a) de l'arbre de transmission qui est susceptible d'être reliée au volant (2) étant reliée à l'un desdits éléments, et un moyen de commande de la vitesse (18 ; 28) étant relié à un autre desdits éléments et disposé de façon à régler sa vitesse, et donc à régler la vitesse de la roue dentée de prise de force, caractérisée par le fait que la roue dentée de prise de force (5) est reliée de façon à tourner avec le troisième desdits éléments.

2. Transmission de puissance destinée à une presse mécanique pour transmettre l'énergie de rotation d'un volant (2) entraîné par un moteur (1) à un entraînement (8) du coulisseau de la presse mécanique, la transmission comprenant un arbre de transmission (4) dont une extrémité est susceptible d'être reliée au volant (2) et dont l'autre extrémité est reliée à une roue dentée de prise de force (5) en vue de sa liaison avec l'entraînement (8) du coulisseau, l'arbre de transmission (4) présentant un train planétaire (19') qui comprend trois éléments (15 ; 24 ; 13, 23, 20), une partie (4a) de l'arbre de transmission qui est susceptible d'être reliée au volant (2) étant reliée à l'un desdits éléments, et un moyen de commande de la vitesse (18 ; 28) étant relié à un autre desdits éléments et disposé de façon à régler sa vitesse, et donc à régler la vitesse de la roue dentée de prise de force, caractérisée par le fait que les trois éléments du train planétaire comprennent une première roue planétaire (15), une deuxième roue planétaire (23) et un ou plusieurs jeux de deux satellites reliés entre eux (13, 23) qui engrènent avec des roues planétaires respectives (15, 24) et qui sont reliés à un porte-satellite commun (20), et par le fait que la roue dentée de prise de force (5) est reliée de façon à tourner avec le troisième desdits éléments.

3. Transmission de puissance selon la revendication 1 ou la revendication 2, caractérisée par le fait que le moyen de commande de la vitesse est un servomoteur (18).

4. Transmission de puissance selon la revendication 1 ou la revendication 2, caractérisée par le fait que le moyen de commande de la vitesse est un frein à couple variable (28).

5. Transmission de puissance selon la revendication 4, caractérisée par une unité de commande (27) comprenant un dispositif (30) de commande du frein qui est susceptible de fournir un signal de commande au frein à couple variable (28), un dispositif (31) de mesure de la vitesse monté sur la partie (4a) de l'arbre de transmission qui est susceptible d'être reliée au volant (2), et un dispositif (33) de commande de la presse qui est susceptible de fournir au dispositif (30) de commande du frein un signal de travail qui est fonction de l'amplitude du signal produit par le dispositif (31) de mesure de la vitesse.

6. Transmission de puissance selon la revendication 3, caractérisée par un différentiel (40) dont l'entrée de puissance (44) est reliée de façon à être entraînée en rotation avec la roue dentée de prise de force (5), dont l'une (39) des sorties de puissance est reliée de façon à transmettre l'énergie de rotation à la partie (4a) de l'arbre de transmission et dont l'autre sortie de puissance (38) est reliée au servomoteur (18).

7. Transmission de puissance selon la revendication 3 ou 6, comprenant un volant (2) et caractérisée par un frein (11) qui est susceptible d'empêcher la rotation de la roue dentée de prise de force (5), et un accouplement par tout ou rien (37) qui est disposé entre le volant (2) et l'arbre de transmission (4a).

8. Transmission de puissance selon la revendication 7, dans laquelle l'accouplement par tout ou rien (37) est un accouplement par roues dentées.

9. Presse mécanique comprenant un entraînement du coulisseau destiné à déplacer l'organe de pressage et une transmission de puissance selon la revendication 3 ou selon l'une quelconque des revendications 6 à 8, la roue dentée de prise de force étant reliée à l'entraînement du coulisseau, caractérisée par une cellule dynamométrique (48) qui est montée sur l'entraînement (8) du coulisseau et qui est susceptible de détecter les surcharges appliquées au coulisseau et de fournir un signal indiquant cet état de fait au servomoteur (18).
